Europäisches Patentamt

European Patent Office

Office européen des brevets

(19)

(11) Veröffentlichungsnummer : **0 329 674 B1**

(12) **EUROPÄISCHE PATENTSCHRIFT**

(45) Veröffentlichungstag der Patentschrift :
20.05.92 Patentblatt 92/21

(51) Int. Cl.$^5$ : **B01D 53/36, B01J 29/06**

(21) Anmeldenummer : 87907104.1

(22) Anmeldetag : 16.10.87

(86) Internationale Anmeldenummer :
PCT/EP87/00611

(87) Internationale Veröffentlichungsnummer :
WO 88/02659 21.04.88 Gazette 88/09

(54) KATALYSATOR ZUR ENTFERNUNG VON STICKOXIDEN AUS ABGASEN.

(30) Priorität : 16.10.86 DE 3635284

(43) Veröffentlichungstag der Anmeldung :
30.08.89 Patentblatt 89/35

(45) Bekanntmachung des Hinweises auf die
Patenterteilung :
20.05.92 Patentblatt 92/21

(84) Benannte Vertragsstaaten :
AT BE CH DE FR GB IT LI LU NL SE

(56) Entgegenhaltungen :
EP-A- 0 062 123
EP-A- 0 217 480
EP-A- 0 219 854

(56) Entgegenhaltungen :
DE-C- 2 458 888
FR-A- 2 446 253
GB-A- 2 017 520
GB-A- 2 162 830
US-A- 4 220 632

(73) Patentinhaber : Steuler-Industriewerke GmbH
Postfach 1448 Georg-Steuler-Strasse 175
W-5410 Höhr-Grenzhausen (DE)

(72) Erfinder : ZAKRZEWSKI, Erhard
Rathausstr. 54
W-5410 Höhr-Grenzhausen (DE)

(74) Vertreter : Vossius & Partner
Siebertstrasse 4 P.O. Box 86 07 67
W-8000 München 86 (DE)

## Beschreibung

Gegenstand der Erfindung ist ein Katalysator, der sich insbesondere zur Entfernung von Stickoxiden aus Abgasen, beispielsweise Rauchgasen aus Kraftwerken, industriellen Feuerungsanlagen oder Stickoxide enthaltenden industriellen Abgasen eignet. Gegenstand der Erfindung ist ferner eine katalytische Masse, die sich zur Entfernung von Stickoxiden aus Abgasen eignet.

Die Entfernung von Stickoxiden aus Abgasen aller Art ist in der heutigen Zeit ein Problem von größter wirtschaftlicher und umweltpolitischer Bedeutung. Bekannte Verfahren zur Entfernung von Stickoxiden aus Abgasen benutzen Katalysatoren, die hauptsächlich aus Titan in Form von Oxiden bestehen und Zusätze aus beispielsweise Eisen, Vanadin, Molybdän oder Wolfram in Form ihrer Oxide oder Salze enthalten; vgl. DE-C-24 58 888. Derartige bekannte Katalysatoren enthalten die Metallzusätze in einem Atomverhältnis zum Titan von 0,01 bis 10 : 1. Titanoxidkatalysatoren sind beispielsweise in Japan seit längerer Zeit zur Entstickung der Rauchgase von Kraftwerken im Einsatz.

Die aus Metalloxiden bestehenden Katalysatoren zur Entstickung, wie sie beispielsweise aus der DE-C-24 58 888 bekannt sind, befinden sich unter den in Europa verlangten Betriebsbedingungen erst im Erprobungsstadium. Ihre Eignung zur großtechnischen Entstickung von beispielsweise Kraftwerksabgasen, insbesondere bei Schmelzkammerfeuerung ist bisher nicht befriedigend. Die Katalysatoren leiden unter anderem an ihrer Anfälligkeit gegen Katalysatorgifte, wie Arsen- und Phosphorverbindungen. Außerdem stellt die umweltunschädliche Beseitigung verbrauchter Metalloxidkatalysatoren ein ungelöstes Problem dar. Die als Zusätze zum Titan verwendeten Metalloxide, insbesondere das in verhältnismäßig großer Menge eingesetzte Vanadiumoxid ist in der verwendeten Form löslich und stellt wegen seiner Giftigkeit eine beträchtiche Umweltgefährdung, dar, sofern es nicht als Sondermüll behandelt wird.

Keramische Materialien dienten für die Metalloxidkatalysatoren bisher teils als Träger, zum Teil wurden keramische Stoffe, wie Zeolithe auch als inerte Füllstoffe für die Metalloxide verwendet. Daneben gibt es auch seit längerer Zeit Versuche, Silikate, beispielsweise Zeolithe, as katalytisch wirkende Stoffe zur Entstickung einzusetzen; vgl. J.R. Klovsky und Mitarb., Ind. Eng. Chem. Prod. Res. Dev., Bd. 19 (1970), S. 218 - 225. In diesem Aufsatz wird auch über die Verwendung der H-Form von Mordenit, einem synsthetischen Zeolith mit einer Porenweite von 8 bis 11 Å zur Entstickung von Abgasen berichtet.

Übliche Zeolithe, d.h. natürliche oder synthetische Zeolithe in ihrer alkalischen oder erdalkakischen Form haben bei der Entstickung jedoch einen für den praktischen Gebrauch unzureichenden Wirkungsgrad. Außerdem ist ihre chemische und thermische Beständigkeit für einem Dauerbetrieb zu gering. Moredenit liefert bei der Entstickung trockener Abgase, die keine Schwefeloxide enthalten, befriedigende Ergebnisse. In der Praxis der Rauchgasentschwefelung wird jedoch aus wirtschaftlichen Gründen die Durchführung der Entstickung vor der Entschwefelung verlangt. Schwefeloxide vermindern aber genauso wie Wasserdampf den Wirkungsgrad des Mordenits bei der Entstickung beträchtlich. Mordenit konnte deshalb für die Entstickung im technischen Maßstab keine Bedeutung erlangen.

In der GB-A-2 162 830 ist ein Ammoniak-Reduktions-Denitrierungsverfahren beschrieben, in dem Katalysatoren verwendet werden, die mit H und/oder Fe ausgetauschte Zeolithformen sind.

Die US-A-4,220,632 beschreibt die katalytische Reduktion von schädlichen Stickoxiden mit Ammoniak in Gegenwart eines Zeolith-katalysators in der H-oder Na-Form. Der eingesetzte Zeolith darf dabei nicht so aktiv sein, daß der Ammoniak vor seiner Reaktion mit dem Stickoxid oxidiert wird. Zeolithe, die mit bekannten Oxidationskatalysatoren wie Übergangs- und Edelmetallen, ausgetauscht sind, werden deshalb als untauglich bezeichnet.

FR-A-2 446 253, die GB-A-2 039 863 entspricht, beschreibt einen aus natürlichem Klinoptilolit durch Ionenaustausch mit $NH_4^+$-Ionen und anschließende Säurebehandlung; hergestellten Katalysator, der zur Reduktion von Stickoxiden verwendet wird.

Die nicht vorveröffentlichte EP-A-219 854 beschreibt einen Katalysator für die selektive Reduktion von Stickoxiden zu Stickstoff in Gegenwart von Ammoniak, der hergestellt ist aus einem Gemisch aus Anatas, einem Zeolith und einem Bindemittel, und der gegebenenfalls einen Promotor, nämlich ein Oxid von Vanadium, Molybdän oder Kupfer, enthält.

Der Erfindung liegt die Aufgabe zugrunde, einen Katalysator zur Entfernung von Stickoxiden aus abgasen bereitzustellen, der sich im technischen Maßstab zum Dauerbetrieb auch in Abgasen eignet, die Schwefeloxide und/oder Wasserdampf enthalten, der unempfindlich ist gegen Katalysatorgifte und der sich nach dem Gebrauch umweltfreundlich beseitigen läßt; darüberhinaus soll mit dem Katalysator eihe hohe $NO_X$ - Reduktion und ein genüger $NH_3$ - Schlupf erzielt werden.

Die Aufgabe wird durch den überraschenden Befund gelöst, daß säurebeständige Zeolithe mit einer definierten kleinen Porenweite in ihrer H-Form, die bestimmte Metalloxide oder -salze enthalten, zur Entfernung

2

EP 0 329 674 B1

von Stickoxiden aus Abgasen in der Lage sind, ohne daß sie von im Abgas ebenfalls anwesenden Schwefeloxiden oder Wasserdampf in ihrer Wirkung beeinträchtigt werden.

Gegenstand der Erfindung ist somit ein Katalysator zur Entfernung von Stickoxiden aus Abgasen enthaltend einen säurebeständigen Zeolith in dessen saurer Form (H-Form), der dadurch gekennzeichnet ist, daß der Zeolith eine Porenweite von 0,3 bis 0,65 nm (3 bis 6,5 Å) aufweist und der Katalysator mindestens eines der Metalle Eisen, Vanadium, Molybdän, Wolfram, Nickel, Kobalt, Kupfer, Chrom oder Uran in Form von deren Oxiden oder Salzen in einer Menge von höchstens 4 Gew.-%, bezogen auf die Masse des Katalysators, enthält, ausgenommen ein Katalysator, der 5 bis 40 Gew.-% Anatas mit einer Oberfläche von mindesten 100 $m^2$/g und einem Sulfatgehalt von mindestens 0,25 Gew.-% enthält.

Zeolithe, ihr chemisch-struktureller Aufbau und ihre verschiedenen Anwendungsmöglichkeiten sind beispielsweise aus Ullmanns Enzyklopädie der technischen Chemie, 4. Auflage, Bd. 24 (1983), Seiten 575 bis 578 bekannt. Zeolithe werden als Ionenaustauscher oder Katalysatoren üblicherweise in ihrer Alkalimetall- bzw. Erdalkalimetallform eingesetzt. Während sich die Alkalimetall- bzw. Erdalkalimetallform der Zeolithe in den bisherigen Versuchen als zur Entstickung von Abgasen nicht geeignet erwiesen hat, konnte nun überraschenderweise festgestellt werden, daß der Einsatz von bestimmten Zeolithen mit einer definierten Porenweite in ihrer sauren Form, die bestimmte Metalloxide oder -salze enthalten, sehr gute Ergebnisse liefert.

Dies ist vermutlich darauf zurückzuführen, daß die saure Form dem Angriff saurer Gase, wie Schwefeldioxid und Schwefeltrioxid, erheblich besser standhält als die Alkalimetall- oder Erdalkalimetallionen enthaltenden Formen, und daß außerdem durch die definierte geringe Porenweite das Eindringen der sauren Gase sowie auch von Wasserdampf in die poröse Struktur erschwert wird.

Vorzugsweise werden für den Katalysator der Erfindung synthetische Zeolithe eingesetzt, die einen geringeren Aluminiumoxidgehalt aufweisen als die natürlichen Zeolithe, deren Aluminiumoxidgehalt bei etwa 12 bis 14 Gew.-% liegt. Ein geringerer Aluminiumoxidgehalt verringert die Anfälligkeit des Katalysators gegen den Angriff saurer Gase, die eine Reaktion mit den Aluminiumionen des Zeoliths eingehen können. Bevorzugt sind für die Katalysatoren der Erfindung synthetische Zeolithe mit einem Aluminiumoxidgehalt von 0,1 bis 10, insbesondere von 3 bis 8 Gew.-%, bezogen auf die Gesamtmasse des Zeoliths. In einer weiteren bevorzugten Ausführungsform läßt sich auch ein synthetischer Zeolith für den Katalysator der Erfindung verwenden, der im wesentlichen frei von Aluminiumoxid ist. Besonders geeignet für den Katalysator der Erfindung sind aluminiumarme Pentasile.

Der Katalysator der Erfindung enthält zusätzlich zu dem Zeolith in der H-Form mit bestimmter Porengröße mindestens eines der katalytisch wirkenden Metalle, die auch als Zusätze in den Titananoxidkatalysatoren Verwendung finden. Es sind dies Eisen, Vanadium, Molybdän, Wolfram, Nickel, Kobalt, Kupfer, Chrom oder Uran in Form von deren Oxiden oder Salzen. Im Katalysator der Erfinding müssen diese Metalloxide oder -salze jedoch nicht in der verhältnismäßig großen Menge eingesetzt werden, die in den Titanoxidkatalysatoren erforderlich ist. Vielmehr genügt eine Menge von höchstens 4 Gew.-%, vorzugsweise höchstens 1 Gew.-%, bezogen auf die Masse des Katalysators. Besonders bevorzugt ist eine Menge von 0,01 bis 1 Gew.-% Metalloxid.

Damit schafft die Erfindung eine entscheidende Verminderung der Menge an zur Entstickung eingesetzten Metalloxide. Die genannte geringe Menge an Metalloxid wird aber andererseits bevorzugt eingesetzt, um die Entstehung von $N_2O$ und das Entweichen von $NH_3$ ($NH_3$-Schlupf) zu verhindern.

Der Katalysator der Erfindung kann ferner zusätzlich Platin in einer Menge von höchstens 0,1 Gew.-%, bezogen auf die Masse des Katalysators, enthalten. Durch einen geringen Platingehalt im Katalysator, vorzugsweise im Austrittsbereich des Gasstromes kann wirkungsvoll ein Entweichen eventuell vorhandenen überschüssigen Ammoniaks vermieden werden.

Schließlich kann der Katalysator der Erfindung auch Titan in Form von Oxiden mit Ausnahme des vorstehend genannten Anatas enthalten. Die Anwesenheit von Titanoxiden wirkt sich im Katalysator der Erfindung günstig für den Start der katalytischen Umsetzung aus. Hierfür eignet sich ein Gehalt an Titanoxiden von höchstens 40 Gew.-%, bezogen auf die Masse des Katalysators.

Unter dem Begriff "Katalysator" ist in der Beschreibung und in den Patentansprüchen der fertige Formkörper zu verstehen, d.h. der aus parallel verlaufenden Röhren aus dem katalytischen Material bestehende, geformte und gebrannte, auf dem Gebiet der Entstickung übliche Wabenkörper. Neben dem Katalysator als fertigem Formkörper mit der Zusammensetzung nach den vorstehend erläuterten Ausführungsformen ist ein weiterer Gegenstand auch eine (ungeformte) "katalytische Masse", die zur Entfernung von Stickoxiden aus Abgasen geeignet ist, enthaltend einen säurebeständigen Zeolith in dessen saurer Form (H-Form), die dadurch gekennzeichnet ist, daß der Zeolith eine Porenweite von 0,3 bis 0,65 nm (3 bis 6,5 Å) aufweist und die Masse 0,01 bis 4 Gew.-%, vorzugsweise 0,01 bis 1 Gew.-%, bezogen auf die Masse des Kataylsators, mindestens eines der Metalle Eisen, Vanadium, Molybdän, Wolfram, Nickel, Kobalt, Kupfer, Chrom oder Uran in Form von deren Oxiden oder Salzen enthält, ausgenommen eine Katalytische Masse, die 5 bis 40 Gew.-% Anatas mit einer Oberfläche von mindesten 100 $m^2$/g und einem Sulfatgehalt von mindestens 0,25 Gew.-% enthält.

3

In der katalytischen Masse ist der Zeolith bevorzugt ein synthetischer Zeolith mit einem Aluminiumoxidgehalt, der geringer ist als der Aluminiumoxidgehalt der natürlichen Zeolithe, insbesondere ein Zeolith mit einem Aluminiumoxidgehalt von 0,1 bis 10 Gew.-%, bezogen auf die Masse des Katalysators, oder ein Zeolith, der im wesentlichen frei von Aluminiumoxid ist.

Die katalytische Masse der Erfindung kann neben den bereits er-wähnten Bestandteilen zusätzlich Titan in Form von Oxiden mit Ausnahme des vorstehend genannten Austers enthalten, das vorzugsweise in einer Menge von höchstens 40 Gew.-%, bezogen auf die Masse des Katalysators, eingesetzt wird.

Unter den Zeolithen in der H-Form sind die Pentasile bevorzugt, die als Grundbaustein einen aus $SiO_4$-Tetraedern aufgebauten Fünfring als Basis-Strukturelement aufweisen. Spezielle Beispiele für geeignete Zeolithe sind Clinoptilotith und die Pentasile der ZSM-Reihe, insbesondere ZSM-5, sowie deren Gemische. Dabei werden $Al_2O_3$-arme

Zeolith-Typen bevorzugt, die Molverhältnisse $Al_2O_3:SiO_2 < 1:60$ aufweisen. Bewährt hat sich dabei insbesondere auch der Einsatz von im wesentlichen $Al_2O_3$-freien Zeolithen. (Zum Vergleich die Molverhältnisse $Al_2O_3:SiO_2$ von Clinoptilolith = 1:8 und ZSM-5 = 1:24.)

Ein wichtiger Vorteil der Erfindung liegt darin, daß die Verwendung der Zeolithe in der H-Form Katalysatoren mit sehr geringem Metalioxidgehalt ermöglicht. Katalytisch wirksame Metalloxide werden durch den Zeolith in ihrer Wirkung verstärkt. Im Vergleich zu den in der DE-C-24 58 888 erwähnten Metalloxiden und deren Salzen wird in vorliegender Erfindung eine vergleichbare Wirkung bereits dann erzielt, wenn das Atomverhältnis (in Gegenwart von Titandioxid) $TiO_2:meO < 0,01$ ist.

Zur Herstellung der Katalysatoren wird die katalytische Masse der Erfindung zu den für die Entstickung im technischen Maßstab üblichen Wabenkörpern mit in Längsrichtung parallel verlaufenden Kanälen verformt, getrocknet und kalziniert. Dabei können nach Bedarf inerte, alkali- und erdalkalifreie Füllstoffe, wie disperse Kieselsäure oder Quarzmehl, zugesetzt werden.

Zur Überführung in die weitgehend alkalifreie Form (H-Form) kann der Zeolith mit einer starken Säure, beispielsweise 1-4 N Salpetersäure behandelt werden. Das Gemisch wird 2 bis 8 Stunden bei erhöhter Temperatur, z.B. etwa 80°C gerührt. Anschließend wird die Säure ausgewaschen. Es werden $Na_2O$-Gehalte < 0,2 % erhalten.

Die Katalysatoren der Erfindung können zur Entstickung der verschiedenartigsten Abgase nach dem bekannten Reduktionsverfahren mit $NH_3$ eingesetzt werden; vgl. I.R. Klovsky und Mitarb. a.a.O.).

Die Beispiele erläutern die Erfindung.

## Beispiele 1 - 12

Die in nachstehender Tabelle I aufgeführten Massen werden zu Wabenkörpern verformt, getrocknet und bei 550°C kalziniert. Abmessungen der Wabenkörper: 151 x 151 mm mit 6 x 6 mm Lochung. 400 Kanäle im Querschnitt.

Zur Messung der katalytischen Wirksamkeit werden Tests bei folgenden Bedingungen in einem simulierten Rauchgasstrom vorgenommen:
Rauchgaszusammensetzung:

5 Vol % $O_2$
13 Vol % $CO_2$
10 Vol % $H_2O$
ca. 72 Vol % $N_2$
1 000 ppm $SO_2$
1 000 ppm $NO_X$

Temperatur : 350°C, SV-Wert : 4 000 $h^{-1}$. Die Zudosierung von $NH_3$ beträgt 800 und 900 ppm entsprechend den Molverhältnissen $NH_3 : NO_X$ von 0,8 bzw. 0,9.

Die Ergebnisse sind in Tabelle II zummangefaßt.

Die Katalystoren der Beispeile 1,5 und 9 fallen nicht unter die beanspruchte Erfindung ; sie sind lediglich zu Vergleichszwecken aufgeführt.

## Tabelle I

| Beispiel | 1 | 2 | 3 | 4 | 5 | 6 | 7 | 8 | 9 | 10 | 11 | 12 |
|---|---|---|---|---|---|---|---|---|---|---|---|---|
| Clinoptililith, H-Form | 49,5 | 49,5 | 49,5 | 49,5 | – | – | – | – | 20,0 | 20,0 | 20,0 | 20,0 |
| ZSM-5, H-Form | – | – | – | – | 53,9 | 53,9 | 53,9 | 53,9 | 33,9 | 33,9 | 33,9 | 33,9 |
| Aluminiumoxid | 8,1 | 8,1 | 8,1 | 8,1 | 8,1 | 8,1 | 8,1 | 8,1 | 8,1 | 8,1 | 8,1 | 8,1 |
| Wasser | 15,1 | 14,3 | 14,2 | 14,6 | 15,1 | 14,3 | 14,2 | 14,6 | 15,1 | 14,3 | 14,2 | 14,6 |
| Vanadiumoxalatlösung 16 %-ig | – | 0,8 | 0,4 | – | – | 0,8 | 0,4 | – | – | 0,8 | 0,4 | – |
| Ammoniumwolframatlösung | – | – | 0,5 | 0,5 | – | – | 0,5 | 0,5 | – | – | 0,5 | 0,5 |
| Titandioxid | 19,8 | 19,8 | 19,8 | 19,8 | 19,8 | 19,8 | 19,8 | 19,8 | 19,8 | 19,8 | 19,8 | 19,8 |
| Salpetersäure, 53 %-ig | 6,7 | 6,7 | 6,7 | 6,7 | 2,3 | 2,3 | 2,3 | 2,3 | 2,3 | 2,3 | 2,3 | 2,3 |
| Polyol | 0,8 | 0,8 | 0,8 | 0,8 | 0,8 | 0,8 | 0,8 | 0,8 | 0,8 | 0,8 | 0,8 | 0,8 |
| Atomverhältnis Ti/V | – | 0,0057 | 0,0029 | – | – | 0,0057 | 0,0029 | – | – | 0,0057 | 0,0029 | – |
| Ti/W | – | – | 0,0068 | 0,0068 | – | – | 0,0068 | 0,0068 | – | – | 0,0068 | 0,0068 |

EP 0 329 674 B1

Tabelle II

1. bei $NH_3$ : NO-Molverhältnis 0,8

| Beispiel | 1 | 2 | 3 | 4 | 5 | 6 | 7 | 8 | 9 | 10 | 11 | 12 |
|---|---|---|---|---|---|---|---|---|---|---|---|---|
| $NO_x$-Reduktion, eta % | 82 | 93 | 94 | 94 | 92 | 96 | 96 | 96 | 90 | 96 | 96 | 96 |
| $NH_3$-Schlupf, ppm | 30 | 12 | 8 | 8 | 2-4 | 0 | 0 | 0 | 8 | 0 | 0 | 0 |

2. bei $NH_3$ : NO-Molverhältnis 0,9

| $NO_x$-Reduktion, eta % | 87 | 94 | 94 | 94 | 95 | 99 | 99 | 99 | 92 | 98 | 98 | 98 |
|---|---|---|---|---|---|---|---|---|---|---|---|---|
| $NH_3$-Schlupf, ppm | 35 | 18 | 18 | 18 | 16 | 8 | 8 | 8 | 20 | 10 | 10 | 10 |

EP 0 329 674 B1

**Patentansprüche**

1. Katalysator zur Entfernung von Stickoxiden aus Abgasen enthaltend einen säurebeständigen Zeolith in dessen saurer Form (H-Form), dadurch gekennzeichnet, daß der Zeolith eine porenweite von 0,3 bis 0,65 nm (3 bis 6,5 Å) aufweist und der Katalysator mindestens eines der Metalle Eisen, Vanadium, Molybdän, Wolfram, Nickel, Kobalt, Kupfer, Chrom oder Uran in Form von deren Oxiden oder Salzen in einer Menge von höchstens 4 Gew.-%, bezogen auf die Masse des Katalysators, enthält, ausgenommen ein Katalysator, der 5 bis 40 Gew.-% Anatas mit einer Oberfläche von mindestens 100 m²/g und einem Sulfatgehalt von mindestens 0,25 Gew.-% enthält.

2. Katalysator nach Anspruch 1, dadurch gekennzeichnet, daß er aus einem synthetischen Zeolith mit einem Aluminiumoxidgehalt besteht, der geringer ist als der Aluminiumoxidgehalt der natürlichen Zeolithe.

3. Katalysator nach Anspruch 2, dadurch gekennzeichnet, daß der synthetische Zeolith einen Aluminiumoxidgehalt von 0,1 bis 10 Gew.-%, bezogen auf die Masse des Zeoliths aufweist.

4. Katalysator nach Anspruch 2, dadurch gekennzeichnet, daß der synthetische Zeolith im wesentlichen frei von Aluminiumoxid ist.

5. Katalysator nach Anspruch 1 bis 4, dadurch gekennzeichnet, daß der synthetische Zeolith ein Pentasil ist.

6. Katalysator nach Anspruch 1 bis 5, dadurch gekennzeichnet, daß er zusätzlich Platin in einer Menge von höchstens 0,1 Gew.-%, bezogen auf die Masse des Katalysators, enthält.

7. Katalysator nach Anspruch 1 bis 6, dadurch gekennzeichnet, daß er zusätzlich Titan in Form von Oxiden enthält.

8. Katalysator nach Anspruch 7, dadurch gekennzeichnet, daß er die Titanoxide in einer Menge von höchstens 40 Gew.-%, bezogen auf die Masse des Katalysators, enthält.

9. Katalytische Masse zur Entfernung von Stickoxiden aus Abgasen, enthaltend einen säurebeständigen Zeolith in dessen saurer Form, dadurch gekennzeichnet, daß der Zeolith eine porenweite von 0,3 bis 0,65 nm (3 bis 6,5 Å) aufweist und die Masse 0,01 bis 4 Gew.-%, bezogen auf die Masse des Katalysators, mindestens eines der Metalle Eisen, Vanadium, Molybdän, Wolfram, Nickel, Kobalt, Kupfer, Chrom oder Uran in Form von deren Oxiden oder Salzen enthält, ausgenommen eine Katalytische Masse, die 5 bis 40 Gew.-% Anatas mit einer Oberfläche von mindestens 100 m²/g und einem Sulfatgehalt von mindestens 0,25 Gew.- % enthält.

10. Masse nach Anspruch 9, dadurch gekennzeichent, daß der zeolith ein synthetischer Zeolith mit einem Aluminiumoxidgehalt ist, der geringer ist als der Aluminiumoxidgehalt der natürlichen Zeolithe.

11. Masse nach Anspruch 10, dadurch gekennzeichnet, daß der Aluminiumoxidgehalt des Zeoliths 0,1 bis 10 Gew.-%, bezogen auf die Masse des Zeoliths, beträgt.

12. Masse nach Anspruch 10, dadurch gekennzeichnet, daß der Zeolith im wesentlichen frei von Aluminiumoxid ist.

13. Masse nach Anspruch 9 bis 12, dadurch gekennzeichnet, daß der synthetische Zeolith ein Pentasil ist.

14. Masse nach Anspruch 9 bis 13, dadurch gekennzeichnet, daß sie zusätzlich Titan in Form von Oxiden enthält.

15. Masse nach Anspruch 14, dadurch gekennzeichnet, daß sie Titanoxid in einer Menge von höchstens 40 Gew.-%, bezogen auf die Gesamtmasse, enthält.

**Claims**

1. A catalyst for removing nitrogen oxides from waste gases which contains an acid-resistant zeolite in its acid form (H-form), characterized in that the zeolite has a pore size of 0.3 to 0.65 nm (3 to 6.5 Å) and the catalyst contains at least one of the metals of the group consisting of iron, vanadium, molybdenum, tungsten, nickel, cobalt, copper, chromium or uranium in the form of oxides or salts thereof in an amount of at the most 4 weight%, based on the weight of the catalyst, with the exception of a catalyst which contains 5 to 40 weight% of anatase having a surface of at least 100 m²/g and has a sulfate content of at least 0.25 weight%.

2. The catalyst according to claim 1, characterized in that it consists of a synthetic zeolite with an alumina content lower than the alumina content of the natural zeolites.

3. The catalyst according to claim 2, characterized in that the synthetic zeolite has an alumina content of 0.1 to 10 weight%, based on the weight of the zeolite.

4. The catalyst according to claim 2, characterized in that the synthetic zeolite is essentially free from alumina.

7

5. The catalyst according to claims 1 to 4, characterized in that the synthetic zeolite is a pentasil.

6. The catalyst according to claims 1 to 5, characterized in that it additionally contains platinum in an amount of at the most 0.1 weight%, based on the weight of the catalyst.

7. The catalyst according to claims 1 to 6, characterized in that it additionally contains titanium in the form of oxides.

8. The catalyst according to claim 7, characterized in that it contains titanium oxides in an amount of at the most 40 weight%, based on the weight of the catalyst.

9. A catalytic composition for removing nitrogen oxides from waste gases which contains an acid-resistant zeolite in its acid form, characterized in that the zeolite has a pore size of 0.3 to 0.65 nm (3 to 6.5 Å) and the mass of 0.01 to 4 weight%, based on the mass of the catalyst contains at least one metal of the groups consisting of iron, vanadium, molybdenum, tungsten, nickel, cobalt, copper, chromium or uranium in the form of oxides or salts thereof, with the exception of a catalytic composition which contains 5 to 40 weight% of anatase having a surface of at least 100 m$^2$/g and has a sulfate content of at least 0.25 weight%.

10. The composition according to claim 9, characterized in that the zeolite is a synthetic zeolite with an alumina content lower than the alumina content of the natural zeolites.

11. The composition according to claim 10, characterized in that the alumina content of the zeolite is 0.1 to 10 weight%, based on the weight of the zeolite.

12. The composition according to claim 10, characterized in that the zeolite is essentially free from alumina.

13. The composition according to claims 9 to 12, characterized in that the synthetic zeolite is a pentasil.

14. The composition according to claims 9 to 13, characterized in that it additionally contains titanium in the form of oxides.

15. The composition according to claim 14, characterized in that it contains titanium oxide in an amount of at the most 40 weight%, based on the total weight.

## Revendications

1. Catalyseur pour éliminer des oxydes d'azote à partir de gaz d'échappement contenant une zéolithe résistant aux acides sous sa forme acide (forme H), caractérisé en ce que la zéolithe présente un diamètre de pore de 0,3 à 0,65 nm (3 à 6,5 Å) et en ce que le catalyseur contient au moins un des métaux fer, vanadium, molybdène, tungstène, nickel, cobalt, cuivre, chrome ou uranium sous la forme de leurs oxydes ou sels, en une quantité d'au maximum 4 % en poids, par rapport à la masse du catalyseur, à l'exception d'un catalyseur qui contient 5 à 40 % en poids d'anatase ayant une surface d'au moins 100 m$^2$/g et avec une teneur en sulfate d'au moins 0,25 % en poids.

2. Catalyseur suivant la revendication 1, caractérisé en ce qu'il est constitué d'une zéolithe synthétique ayant une teneur en oxyde d'aluminium qui est plus faible que la teneur en oxyde d'aluminium des zéolithes naturelles.

3. Catalyseur suivant la revendication 2, caractérisé en ce que la zéolithe synthétique présente une teneur en oxyde d'aluminium de 0,1 à 10 % en poids, par rapport à la masse de la zéolithe.

4. Catalyseur suivant la revendication 2, caractérisé en ce que la zéolithe synthétique est sensiblement exempte d'oxyde d'aluminium.

5. Catalyseur suivant l'une des revendications 1 à 4, caractérisé en ce que la zéolithe synthétique est un pentasil.

6. Catalyseur suivant l'une des revendications 1 à 5, caractérisé en ce qu'il contient en supplément du platine en une quantité d'au maximum 0,1 % en poids, par rapport à la masse du catalyseur.

7. Catalyseur suivant l'une des revendications 1 à 6, caractérisé en ce qu'il contient en supplément du titane sous la forme d'oxydes.

8. Catalyseur suivant la revendication 7, caractérisé en ce qu'il contient les oxydes de titane en une quantité d'au maximum 40 % en poids, par rapport à la masse du catalyseur.

9. Masse catalytique pour éliminer des oxydes d'azote à partir de gaz d'échappement, contenant une zéolithe résistant aux acides sous sa forme acide, caractérisée en ce que la zéolithe présente un diamètre de pore de 0,3 à 0,65 nm (3 à 6,5 Å) et en ce que la masse contient 0,01 à 4 % en poids, par rapport à la masse du catalyseur, d'au moins un des métaux fer, vanadium, molybdène, tungstène, nickel, cobalt, cuivre, chrome ou uranium sous la forme de leurs oxydes ou sels, à l'exception d'une masse catalytique qui contient 5 à 40 % en poids d'anatase ayant une surface d'au moins 100 m$^2$/g et avec une teneur en sulfate d'au moins 0,25 % en poids.

10. Masse suivant la revendication 9, caractérisée en ce que la zéolithe est une zéolithe synthétique ayant une teneur en oxyde d'aluminium qui est plus faible que la teneur en oxyde d'aluminium des zéolithes naturelles.

11. Masse suivant la revendication 10, caractérisée en ce que la teneur en oxyde d'aluminium de la zéolithe est de 0,1 à 10 % en poids, par rapport à la masse de la zéolithe.

12. Masse suivant la revendication 10, caractérisée en ce que la zéolithe est sensiblement exempte d'oxyde d'aluminium.

13. Masse suivant l'une des revendications 9 à 12, caractérisée en ce que la zéolithe synthétique est un pentasil.

14. Masse suivant l'une des revendications 9 à 13, caractérisée en ce qu'elle contient en supplément du titane sous la forme d'oxydes.

15. Masse suivant la revendication 14, caractérisée en ce qu'elle contient de l'oxyde de titane en une quantité d'au maximum 40 % en poids, par rapport à la masse globale.